# EUROPEAN PATENT SPECIFICATION

(11) **EP 2 239 939 B1**
(45) Date of publication and mention of the grant of the patent: **11.03.2015**
(21) Application number: 10000605.5
(22) Date of filing: 21.01.2010
(51) Int. Cl.: H04N 5/445, H04N 7/08

(54) **Image display system**
Bildanzeigesystem
Système d'affichage d'image

(30) Priority: 08.04.2009 JP 2009093615
(43) Date of publication of application: 13.10.2010
(73) Proprietor: Mitsubishi Electric Corporation, Tokyo 100-8310 (JP)
(72) Inventor: Matoba, Kazuaki, Tokyo 100-8310 (JP); Yamada, Takeshi, Tokyo 100-8310 (JP); Kuroda, Yasutaka, Tokyo 100-8310 (JP); Nakagakiuchi, Susumu, Tokyo 102-0073 (JP)
(74) Representative: Pfenning, Meinig & Partner GbR

(56) References cited:
- EP-A2- 0 858 224
- EP-A2- 1 032 201
- GB-A- 2 232 031
- US-A- 5 715 515
- US-B1- 7 154 538

## Description

### BACKGROUND OF THE INVENTION

### Field of the Invention

The present invention relates to an image display system displaying a character image by superimposing on a display image.

Description of the Background Art GB 2 232 031 A discloses a CATV system in which character information related to an individual television signal source (i.e., a program) is transmitted from a central station by being multiplexed on a television signal. The character information is detected at the receiver and converted into a character image by a character generator. The central station is connected to a number of receiving terminal units. Therein, the character data can be modulated onto an audio signal; in the receiver, the audio signal data and the character data are separated and the character data is superimposed on the video signal before the video signal is displayed. A plurality of character data generators, one for each television signal source, can be provided (claim 3).

EP 1 032 201 A2 deals with various kinds of image displays to be connected to one supply source, wherein the supply source acquires characteristic data of the image displays such as, e.g., the number of pixels of the image display, in order to determine a signal communication specification with the image display on the basis of the characteristic data acquired.

In the field of subscription television terminals, US 5,715,515 A deals with a display of graphics information on the screen of a subscriber. One gist of the described system is to allow a system operator to display different graphics information on the screen of different subscribers independent of equipment manufacturers.

EP 0 858 224 A2 deals with the provision of information from a local source to a television viewer, wherein the information can be displayed in the foreground of a video image or superimposed on the video image.

In general, an image display device in a conventional image display system makes use of a vertical blanking interval of an analog video signal so as to decode character code information superimposed in a specified horizontal scanning interval, as a method of displaying a character on a display image. This method is widely practiced in a teletext broadcasting of a television in the United States and Japan, and in a recording signal of videotapes, DVDs and the like.

However, this character code information is inputted to the image display device in a state of being added to a video signal, so that the character code information depends on the video signal. Thus, there has been a problem that a method of processing and editing the character code information displayed on the image display device was not prepared for a user of the image display device.

As a solution to the above problem, there is provided an image display device enabling a character image not depending on an original video signal to be displayed by setting a position at which the aforementioned character code information is superimposed in a horizontal scanning interval different from the above specified horizontal scanning interval, adding the character code information to the horizontal scanning interval set in the above, and reading the information of a part of the horizontal scanning interval where the character code information is added (see Japanese Patent Application Laid-Open No. H3-13185 (1991)).

According to the conventional method described above, since the character code information added in the steps of producing an image content is fixed, it is impossible in principle to process and edit the character code information by anyone except a producer of the image content. Further, the solution disclosed in Japanese Patent Application Laid-Open No. H3-13185 (1991) needs a dedicated device for adding the character code information to the video signal, and preparing that device is a heavy burden on a user. Still further, since the character code information is used in the image display device only when the video signal with the character code information added thereto is displayed, an input signal of the image display device is limited. This has caused a problem of hampering convenience.

When the character images are requested to be provided all together to a plurality of the image display devices, there has been a problem that the character images are difficult to be reliably displayed on all of the image display devices since the video display depends on the selection of the image display device even when a single video signal with the character code information added thereto is supplied to each of the image display devices (that is, the aforementioned single video signal may be selected, or another video signal may be selected).

### SUMMARY OF THE INVENTION

It is an object of the present invention to provide an image display system capable of displaying a character image without depending on an output image.

According to an aspect of the present invention, an image display system includes a terminal transmitting character code information, and an image display device connected to the terminal through a network and displaying an image. The image display device includes a first input means, a first network interface means, a character image generating means, an image synthesis means, and an image display means. Video signals are inputted to the first input means. The first network interface means receives the character code information transmitted from the terminal. The character image generating means generates a character image from the character code information in the first network interface means. The image synthesis means synthesizes the video signals in the first input means and the character image in the character image generating means. The image display means displays an image synthesized in the image synthesis means.

From the above configuration, an arbitrary character string is transmitted to the image display device as character code information, and the image display device synthesizes the character image and the video signal, thereby allowing to display the character image not fixed by (not depending on) the video signal.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing a configuration of a first preferred embodiment of the present invention;
FIG. 2 is a block diagram of a host terminal 400 of the first preferred embodiment of the present invention;
FIG. 3 is a flow chart when the host terminal 400 of the first preferred embodiment of the present invention detects an image display devices;
FIG. 4 is a flow chart when the host terminal 400 of the first preferred embodiment of the present invention generates character code information to transmit to a network;
FIG. 5 is a sequence flow diagram showing a process of detection protocol of the image display device of the first preferred embodiment of the present invention;
FIG. 6 is a block diagram showing a configuration of a second preferred embodiment of the present invention;
FIG. 7 is a flow chart when a host terminal 401 of the second preferred embodiment of the present invention detects image display devices;
FIG. 8 is a flow chart when the host terminal 401 of the second preferred embodiment of the present invention generates character code information to transmit to a network.

### DESCRIPTION OF THE PREFERRED EMBODIMENTS

### <A. First Preferred Embodiment>

### <A-1. Configuration of Image Display System>

Hereinafter, an image display device according to the first preferred embodiment of the present invention will be described.

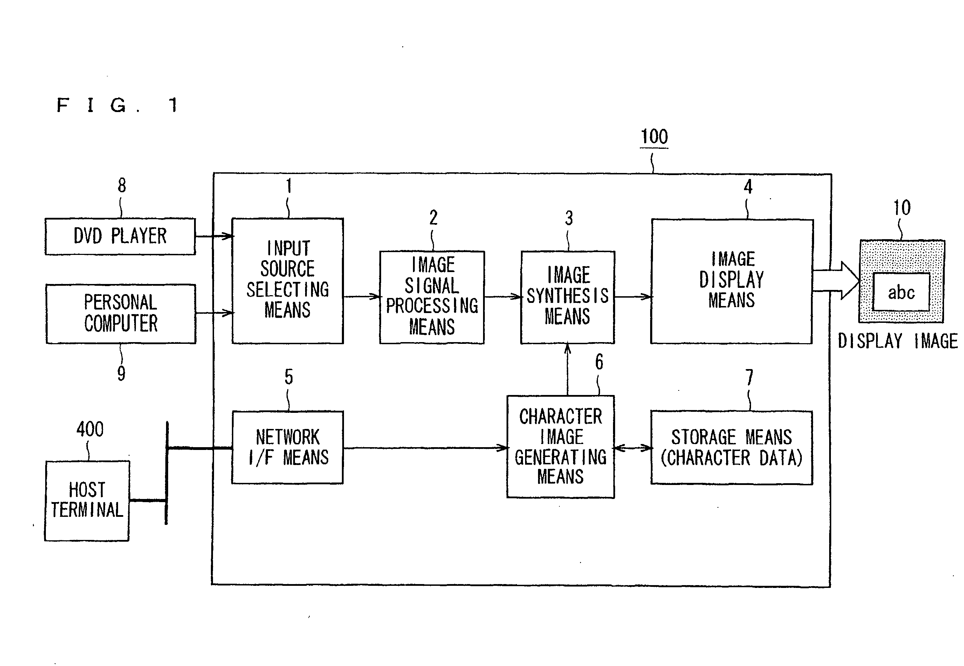

FIG. 1 is a block diagram schematically showing a configuration of the first preferred embodiment of the present invention.

As shown in FIG. 1, an image display system of the present invention is composed of a host terminal 400 transmitting character code information, and an image display device 100 connected to the host terminal 400 through a network and displaying an image.

### <A-2. Configuration of Image Display Device>

The image display device 100 shown in FIG. 1 includes an input source selecting means 1 as a first input means to which video signals are inputted, and a network I/F means 5 as a first network interface means receiving character code information transmitted from the host terminal 400, and further includes: a character image generating means 6 generating a character image from the character code information in the network I/F means 5 and character image information which is character-shaped information corresponding to the character code information previously stored in a storage means 7; an image synthesis means 3 synthesizing a signal obtained by processing the video signals inputted to the input source selecting means 1 in an image signal processing means 2, and the character image in the character image generating means 6; and an image display means 4 displaying an image synthesized in the image synthesis means 3.

The input source selecting means 1 switches a signal from an RCA jack or an S terminal receiving an analog video signal input such as a DVD player 8, HDMI receiving a digital video signal input, a DVI-D terminal, and a D-SUB terminal receiving an input signal such as a personal computer 9, to a corresponding signal depending on an input switching operation of a user not shown, and selects therefrom.

The image signal processing means 2 converts the video signals in various forms inputted from the input source selecting means 1 into a signal form so as to conform to an input for a display image generating device generating an display image. The image signal processing means 2 also performs various image adjustments.

The network I/F means 5 is a network interface on the basis of a standard of LAN and the like, for example, and communicates with connected external devices (host terminal 400 in FIG. 1).

The character image generating means 6 generates image data for displaying the character code information as a character image.

The storage means 7 stores character data corresponding to the character code information to be displayed on a screen as the character image, and outputs the character data (character-shaped and the like) which is requested by a connected device.

### <A-3. Operation of Image Display Device>

Next, the operation of the image display device 100 will be described.

First, an video signal selected from the input signals of the DVD player 8, the personal computer 9 and the like inputted to the input source selecting means 1 is outputted.

The output of the input source selecting means 1 is inputted to the image signal processing means 2, added with various image adjustments, and thereafter converted to a signal form so as to conform to an input for a display image generating device generating a display image of the image displaying means 4, and outputted to the image synthesis means 3 as a display video signal.

Next, the network I/F means 5 is connected to a network such as LAN and the like, and responds to the host terminal 400 through a network with detection protocol detecting image display devices capable of displaying the character code information transmitted from the host terminal 400 as the character image, so as to allow the host terminal 400 to specify the image display devices capable of displaying the character code information as the character image. Only the image display device including the network I/F means 5 that has responded that the image display device is capable of displaying the character code information as the character image, obtains the character code information from the host terminal 400.

The character code information obtained by the communication with the host terminal 400 is outputted from the network I/F means 5 and inputted to the character image generating means 6. The character image generating means 6 extracts necessary information for displaying a character from the character code information, and then generates character string data and character decoration for generating the character image and information such as a display position, to generate the character image by obtaining the character shape of the character string data from the storage means 7, adding appearance information and the like, thereby generating the character image data.

The image synthesis means 3 synthesizes the character image data generated by the character image generating means 6 on a display video signal outputted from the image signal processing means 2.

The display video signal outputted from the image synthesis means 3 is inputted to the image display means 4, and then, the character code information on the inputted and selected video, which is inputted in the host terminal 400, is displayed as the character image on the video which is displayed by the image display means 4 as shown by a display image 10.

As described above, a network interface is added to the image display device 100, the character code information is transmitted to the image display device 100 detected with the detection protocol detecting the image display device 100 from the host terminal 400, generating the character image from the character code information received in the image display device 100 to synthesize a display image, thereby producing the effect of displaying the character image on the display video without depending on the display image.

Further, an arbitrary character string is transmitted to the image display device 100 as the character code information and is synthesized with the video signal as the character image in the image display device 100, allowing to display the character image not fixed by the video signal on the display video.

### <A-4. Configuration of Host Terminal>

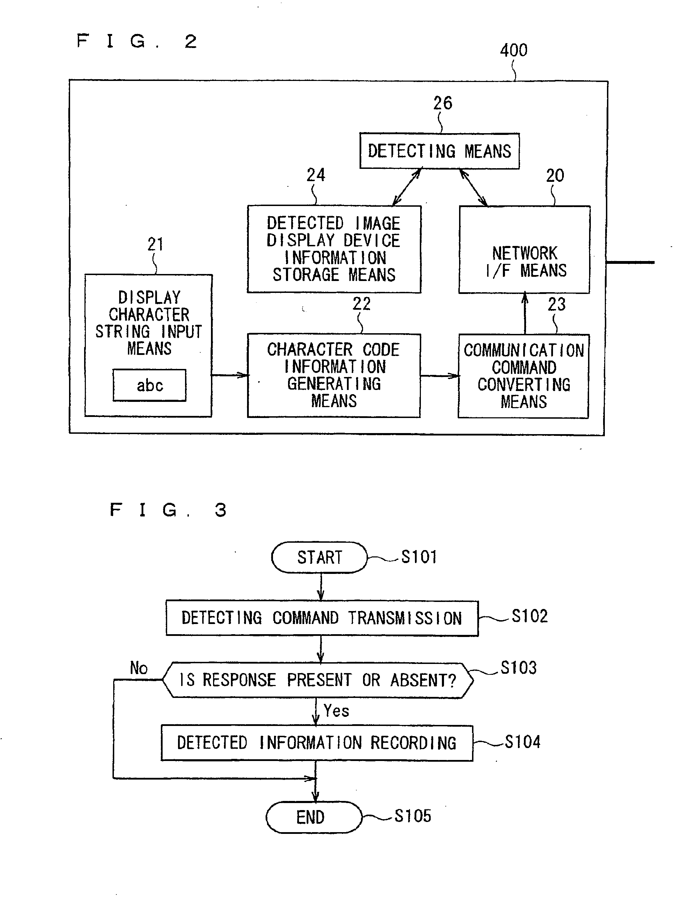

Next, the host terminal 400 sending out the character code information will be described. FIG.2 is a block diagram schematically showing a configuration of the host terminal 400 of the present invention. The host terminal 400 may be connected to a plurality of image display devices.

The host terminal 400 includes: a display character string input means 21 as a second input means capable of externally inputting a character string; a character code information generating means 22 generating character code information from the character string in the display character string input means 21; a communication command converting means 23 converting the character code information generated in the character code information generating means 22 into a communication command for transmitting to a network; a network I/F means 20 as a second network interface means transmitting the communication command converted in the communication command converting means 23 to the image display device; a detecting means 26 detecting image display devices capable of displaying a character image with detection protocol through the network I/F means 20; and a detected image display device information storage means 24 as a display device storage means storing the image display devices detected in the detecting means 26.

The host terminal 400 may be a personal computer, for example, and may include the network I/F means 20 such as LAN and the like.

The display character string input means 21 is a GUI composed of setup items relating a character input screen and appearance of character display, for example. A user inputs the character string to be displayed to the character input screen with a keyboard and the like, and selects the appearance of display from the setup items.

The character code information generating means 22 generates the character code information on the basis of information inputted with GUI and the like.

The communication command converting means 23 converts the character code information into a communication command for transmitting to a network.

The detected image display device information storage means 24 is a storage means storing information of the image display device.

### <A-5. Operation of Host Terminal>

Next, the operation of the host terminal 400 will be described.

The detecting means 26 in the host terminal 400 transmits an image display device detecting command through the network I/F means 20 with detection protocol of the image display device for detecting image display devices capable of displaying a character image described below to a network. The image display devices capable of displaying the character image, for example, the image display device 100 shown in the first preferred embodiment, responds to the detection protocol and transmits a response to the host terminal 400. When receiving the response, the host terminal 400 stores information of the image display device in the detected image display device information storage means 24.

Next, the host terminal 400 receives an input of a display character string from a user in the display character string input means 21. After the display character input has been completed, the user transmits the information to convert the inputted character string into a character code in the character code information generating means 22 with the output of the display character string input means 21, generate character code information by encoding appearance, and convert the generated character code information into a communication command in the communication command converting means 23.

The output of the communication command converting means 23 is transmitted to the network I/F means 20, and the network I/F means 20 determines the destination based on the information stored in the detected image display device information storage means 24 and transmits the output of the communication command converting means 23.

The communication data transmitted from the network I/F means 20 is received in the image display device 100 and the character image is generated from the communication data, thereby displaying the character image in the display image as shown by the display image 10.

Next, the flow of the operation of the host terminal 400 will be described by a flow chart. FIG. 3 is a flow chart showing the operation of detecting a projector (image display device) by the host terminal 400.

First, a sequence begins from a start (a step S101), and then an image display device detecting command is transmitted by the detection protocol of the image display device described later (a step S102).

Next, in a step S103, a response to the command transmission (the step S102) is confirmed. When a response is present, recording of the detected information is conducted (a step S104), and a detecting sequence of the image display device is terminated in a step S105. When a response is absent in the step S103, the detecting sequence proceeds to the step S105 and is terminated.

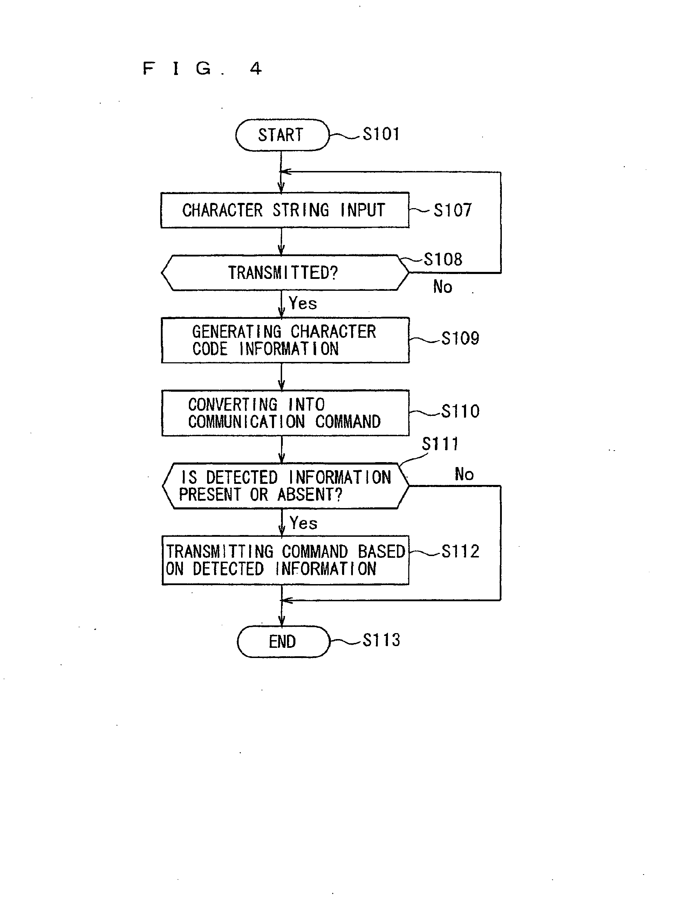

FIG. 4 is a flow chart showing the operation of the host terminal 400 from the character string input to the command transmission. The operation starts in a step S101. A character string is inputted in a step S107, and the inputted character string is confirmed in a step S108. When a user transmits a character string, the transmission is detected in the step S108. Then, character code information is generated (a step S109) and converted into a communication command (a step S110). Next, in a step S111, the result of the detected information recording of the detection command (the step S104) is confirmed. When detected information is present, the command transmission is conducted on the basis of the detected information (a step S112), and the operation is terminated (a step S113). When detected information is absent, the operation proceeds to the step S113 and is terminated.

By composing the host terminal 400 as described above, a character string is easily inputted with GUI and the like. By detecting image display devices capable of displaying a character image from the host terminal 400 and transmitting character code information, a user is able to display an arbitrary character image on the image display device 100.

Each of components such as a memory and an operating device configuring the host terminal 400 may be provided as software.

The host terminal 400 is easily obtained by configuring the host terminal 400 with a general purpose personal computer and the like.

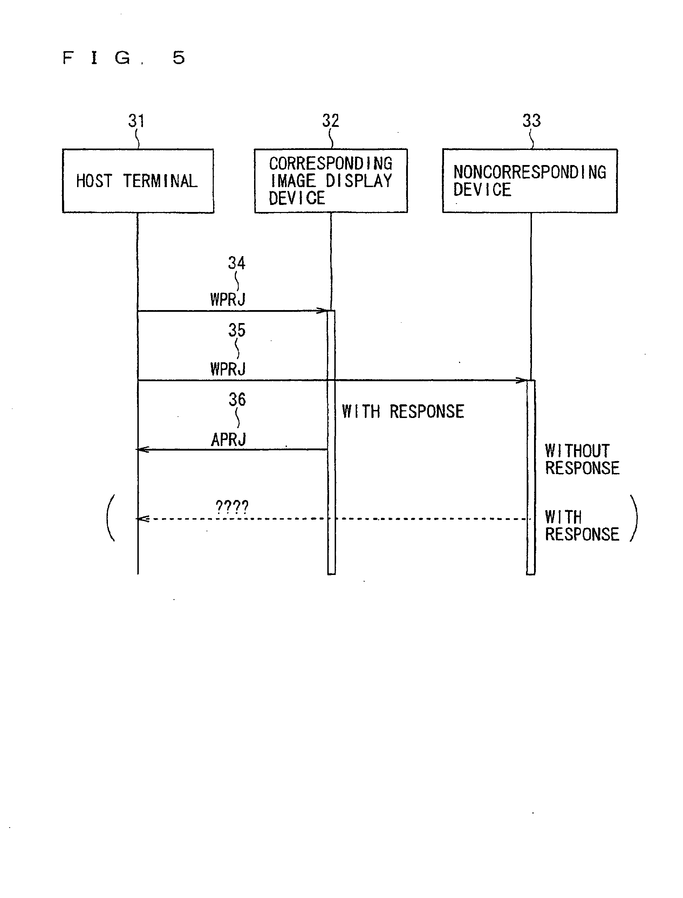

Next, the operation of the detection protocol of the image display device according to the present invention will be described. FIG. 5 is a sequence flow showing a content of the detection protocol of the image display device. With the detection protocol of the image display device, a command for detecting image display devices capable of displaying a character image is defined as "WPRJ", and a reply (response transmission) when the image display devices capable of displaying a character image receive the "WPRJ" command through a network is defined as "APRJ", each of commands being a signal where a preset character string is converted into a communication command in the communication command converting means 23 shown in FIG. 2. Each of the commands conducts communications with UDP command communication, for example.

A host terminal 31 in FIG. 5 corresponds to the network I/F means 20 of the host terminal 400 shown in FIG. 2, and a corresponding image display device 32 corresponds to the communication of the network I/F means 5 of the image display device 100 shown in FIG. 1. A noncorresponding device 33 corresponds to a network I/F means of a display noncorresponding device of a character image which is not shown.

Next, the operation of the detection protocol of the image display device will be described in detail. The detection commands WPRJ 34 and 35 of the detection protocol of the image display device will be transmitted from the host terminal 31. The corresponding image display device 32 having received the WPRJ 34 responds to the detection command WPRJ 34 and returns the APRJ 36 that is a response command thereof to the host terminal 31 immediately. The host terminal 31 having received the APRJ 36 recognizes that the corresponding image display device 32 is an image display device capable of displaying the character image, and stores the information.

Next, the noncorresponding device 33 having received the WPRJ 35 is unable to judge the detection command and does not respond, or does not return a correct response command even if responding. At this time, the host terminal 31 ignores when there are no responses, and determines that it is not an image display device capable of displaying the character image, when the returned response command is incorrect.

### <A-6. Effects>

According to the first preferred embodiment of the present invention, the image display system includes the host terminal 400 which is a terminal transmitting character code information and an image display device 100 connected to the host terminal 400 through a network and displaying an image. The image display device 100 includes: the input source selecting means 1 as a first input means to which video signals are inputted, the network I/F means 5 as a first network interface means receiving the character code information transmitted from the host terminal 400, the character image generating means 6 generating a character image from the character code information in the network I/F means 5, the image synthesis means 3 synthesizing the video signals in the input source selecting means 1 and the character image in the character image generating means 6, and the image display means 4 displaying the image synthesized in the image synthesis means 3. As a result, an arbitrary character string is transmitted to the image display device 100 as the character code information so as to synthesize with the video signal as a character image in the image display device 100, thereby allowing to display the character image which is not fixed by the video signal (not depending) on the display video.

Further, the host terminal is prepared by using a general purpose personal computer, thereby producing the effect of easily providing a system displaying an arbitrary character image.

According to the first preferred embodiment of the present invention, the image display system further includes a storage means 7 previously storing character image information which is character-shaped information corresponding to the character code information, and the character image generating means 6 generates the character image from the character code information and the character image information in the storage means 7 to transmit the arbitrary character string to the image display device 100 as the character code information, generate the character image with the character image information in the image display device 100, and synthesize with the video signal as the character image, thereby allowing to display the character image not fixed by the video signal on the display video.

According to the first preferred embodiment of the present invention, in the image display system, the first input means is the input source selecting means 1 switching and selecting the inputted video signal, transmitting the arbitrary character string to the image display device 100 as the character code information to switch as the character image in the image display device 100 and synthesize with the selected video signal, thereby allowing to display the character image not fixed by the video signal on the display video.

According to the first preferred embodiment, in the image display system including a plurality of the image display devices 100, the host terminal 400 includes the detecting means 26 detecting the image display devices 100 capable of displaying the character image with the detection protocol and the detected image display device information storage means 24 as a display device storage means storing the image display devices 100 detected in the detecting means 26, adding a network interface to the image display devices, transmitting the character code information to the image display device 100 detected by the detection protocol detecting the image display devices from the host terminal, and generating the character image from the character code information received in the image display device 100 to synthesize with the display image, thereby producing the effect of reliably displaying the character image on the display video without depending on the display image.

According to the first preferred embodiment of the present invention, in the image display system, the host terminal 400 further includes: the display character string input means 21 as a second input means capable of externally inputting a character string, the character code information generating means 22 generating character code information from the character string in the display character string input means 21, the communication command converting means 23 converting the character code information generated in the character code information generating means 22 into a communication command for transmitting to a network, and the network I/F means 20 as a second network interface means transmitting the plurality of the image display devices 100. The detection protocol transmits a previously-determined given character string to a plurality of image display devices through a network, and the image display device 100 capable of displaying the character image transmits a response through the network so as to be detected, adding a network interface to the image display devices, transmitting the character code information to the image display devices detected by the detection protocol detecting the image display devices from the host terminal, generating the character image from the character code information received in the image display device 100 to synthesize with the display image, thereby producing the effect of reliably displaying the character image on the display video without depending on the display image.

### <B. Second Preferred Embodiment>

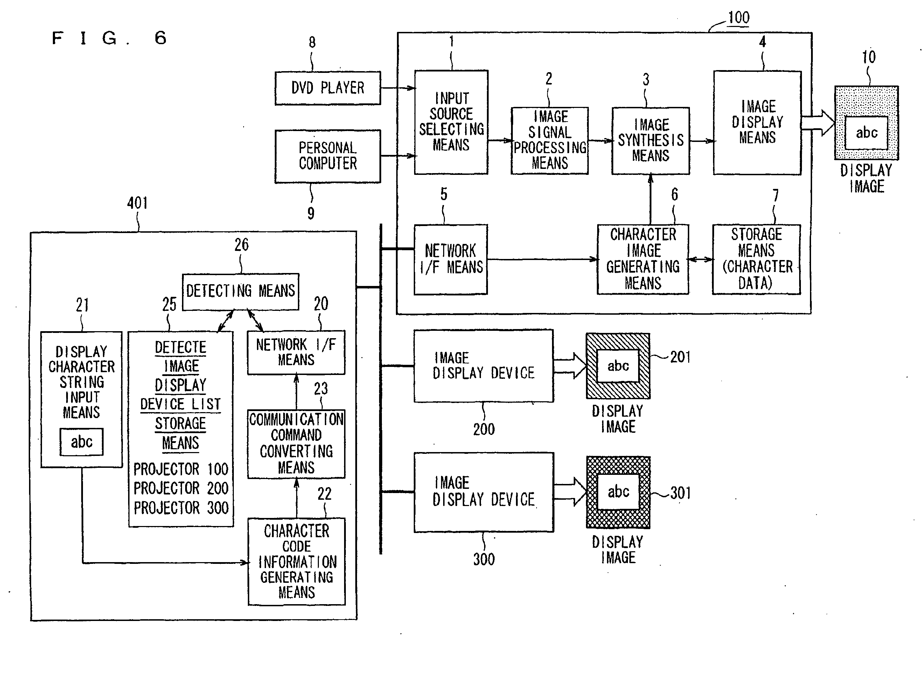

FIG. 6 is a block diagram schematically showing a configuration of the second preferred embodiment of the present invention. A configuration of a host terminal 401 in the second preferred embodiment of the present invention is provided by replacing the detected image display device information storage means 24 in the configuration of the host terminal 400 in the first preferred embodiment with a detected image display device list storage means 25.

### <B-1. Configuration of Host Terminal>

As described above, the host terminal 401 in the second preferred embodiment is configured to replace the detected image display device information storage means 24 of the host terminal 400 in the first preferred embodiment with the detected image display device list storage means 25. Other components and the connections therebetween are same as shown in the first preferred embodiment, and thus, the description thereof will be omitted.

### <B-2. Operation of Host Terminal>

Next, the operation of the host terminal 401 will be described in detail. The host terminal 401 transmits an image display device detecting command by detection protocol of the image display device for detecting image display devices capable of displaying a character image through a network.

The image display device capable of displaying the character image, for example, the image display device 100 described in the first preferred embodiment, responds to the detection protocol and transmits a response to the host terminal 401. The host terminal 401 lists a plurality of image display devices detected by receiving the response to store in the detected image display device list storage means 25.

The host terminal 401 receives an input of a display character string from a user in the display character string input means 21. After the display character input has been completed, the user transmits the information to convert the inputted character string into a character code in the character code information generating means 22 with the output of the display character string input means 21, generate character code information by encoding appearance, and convert the generated character code information into a communication command in the communication command converting means 23.

The output of the communication command converting means 23 is transmitted to the network I/F means 20, and the network I/F means 20 transmits the output of the communication command converting means 23 at a time to a plurality of destinations stored and listed in the detected image display device list storage means 25.

The communication data transmitted from the network I/F means 20 is received by, for example, the image display devices 100, 200, 300 listed in the detected image display device list storage means 25, and the character image is displayed in each of the image display devices as shown in the display images 10, 201, 301.

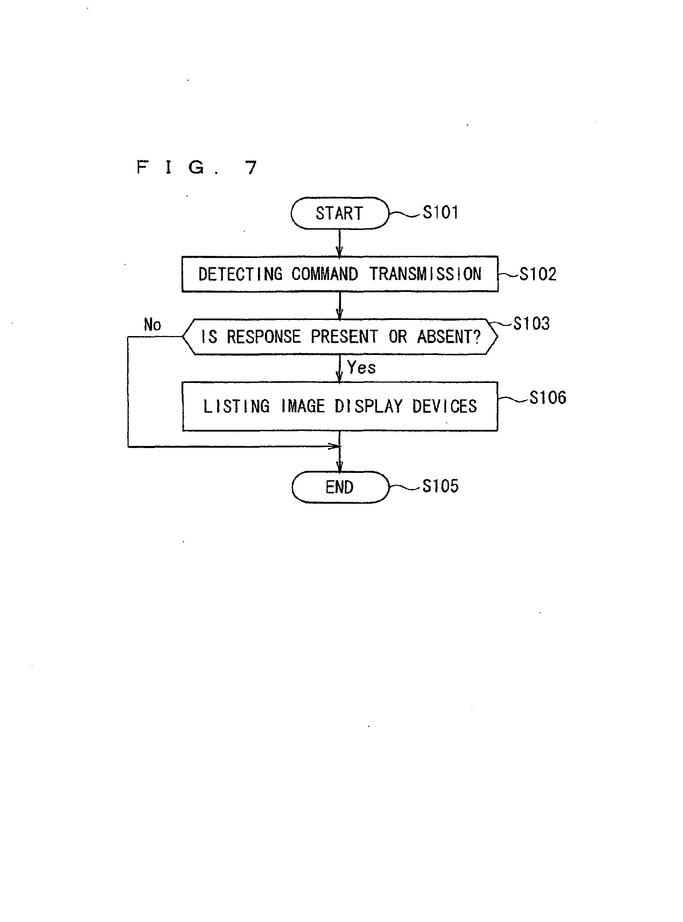

Next, the flow of the operation of the host terminal 401 will be described by a flow chart. FIG. 7 is a flow chart showing the operation of detecting a projector (image display device) of the host terminal 401. First, a sequence begins from a start (a step S101), and then an image display device detecting command is transmitted by the detection protocol of the image display device (a step S102).

Next, in a step S103, a response to the command transmission (the step S102) is confirmed. When a response is present, listing of the image display devices is conducted (a step S106), and a detecting sequence of the image display devices is terminated in a step S105. When a response is absent in the step S103, the detecting sequence proceeds to the step S105 and is terminated.

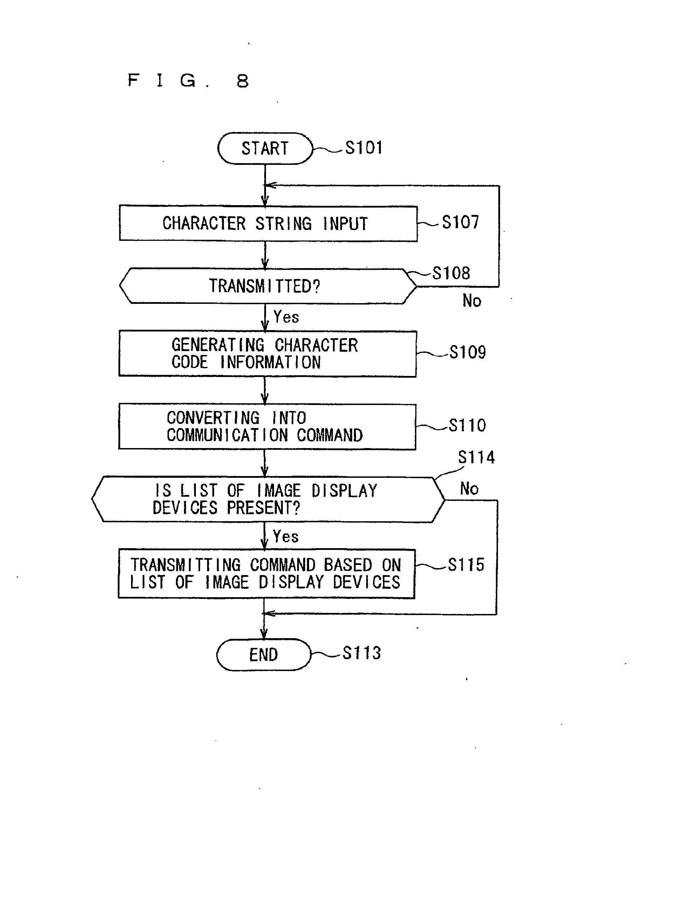

FIG. 8 is a flow chart showing the operation of the host terminal 401 from the character string input to the command transmission. The operation starts in a step S101. A character string is inputted in a step S107, and the transmission of the inputted character string is confirmed in a step S108. When a user transmits a character string, the transmission is detected in the step S108. Then, character code information is generated (a step S109) and converted into a communication command (a step S110). Next, in a step S114, the result of listing the image display devices of the detection command (the step S106) is confirmed. When a list is present, the command transmission is conducted on the basis of the list (a step S115), and the operation is terminated (a step S113). When a list is absent, the operation proceeds to the step S113 and is terminated.

As described above, a list of the image display devices capable of displaying the character image is stored in the host terminal 401, and the character code information is transmitted to the listed image display devices, thereby allowing to provide the arbitrary character image to the plurality of image display devices at a time without depending on the output image.

### <B-3. Effects>

According to the second preferred embodiment, in the image display system, the detected image display device list storage means 25 as a display device storage means lists and stores the detected plurality of image display devices to keep the list of the image display devices capable of displaying the character image in the host terminal 401 and transmit the character code information to the listed image display devices, thereby allowing to provide the arbitrary character image to a plurality of projectors (image display devices) at a time without depending on the output image.

### Industrial Applicability

As an application example, the present invention is applied to an image display system composed of an image display device equipped with a network interface and a host terminal. Image display devices capable of displaying an image are specified with the detection protocol from the host terminal to transmit the character code information, thereby displaying the character image on the image display device without depending on the output image.

While the invention has been shown and described in detail, the foregoing description is in all aspects illustrative and not restrictive. It is therefore understood that numerous modifications and variations can be devised without departing from the scope of the invention.

## Claims

1. An image display system comprising:
a terminal (400) transmitting character code information; and
a plurality of image display devices (100) each being connected to said terminal (400) through a network and displaying an image;
wherein said image display devices (100) respectively includes:
a first input means (1) to which video signals are inputted;
a first network interface means (5) receiving said character code information transmitted from said terminal (400);
a character image generating means (6) generating a character image from said character code information in said first network interface means (5);
an image synthesis means (3) synthesizing said video signals in said first input means (1) and said character image in said character image generating means (6); and
an image display means (4) displaying the image synthesized in said image synthesis means (3),
**characterized in that**
said terminal (400) includes:
a detecting means (26) detecting image display devices (100) capable of displaying said character image out of said plurality of image display devices (100) by a detection protocol; and
a display device storage means (24) storing detected information about said image display devices (100) detected in said detecting means (26); and
a second network interface means (20) transmitting said character code information to said image display devices (100) about which detected information is present in said display device storage means (24).

2. The image display system according to claim 1, wherein
said terminal (400) further includes:
a second input means (21) capable of externally inputting a character string;
a character code information generating means (22) generating said character code information from said character string in said second input means (21); and
a communication command converting means (23) converting said character code information generated in said character code information generating means (22) into a communication command for transmitting to said network, wherein
said second network interface means (20) transmits said communication command converted in said communication command converting means (23) to said image display devices (100) about which detected information is present in said display device storage means (24), and
said detection protocol is a protocol detecting said image display devices (100) capable of displaying said character image in a manner that said terminal (400) transmits a previously-determined given character string to said plurality of image display devices (100) through said network and said image display devices (100) capable of displaying said character image transmits a response to said terminal (400) through said network.

3. The image display system according to one of claims 1 or 2,
wherein said display device storage means (24) stores a list of said image display devices (100) detected in said detecting means (26).

4. The image display system according to one of claims 1, 2 or 3, wherein the image display devices (100) further comprise a storage means (7) previously storing character image information which is character-shaped information corresponding to said character code information,
wherein said character image generating means (6) generates said character image from said character code information and said character image information in said storage means (7).

5. The image display system according to one of-claims 1, 2, 3 or 4, wherein said first input means (1) is an input source selecting means switching and selecting said video signals to be inputted.

## Patentansprüche

1. Ein Bilddarstellungssystem enthaltend:
ein Endgerät (400), das Zeichencodeinformation überträgt; und
eine Mehrzahl von Bilddarstellungsvorrichtungen (100), die jede mit dem genannten Endgerät (400) durch ein Netzwerk verbunden ist und ein Bild darstellt;
wobei die genannten Bilddarstellungsvorrichtungen (100) jeweils enthalten:
ein erstes Eingabemittel (1), an das Videosignale eingegeben werden;
ein erstes Netzwerk-Interfacemittel (5), das die genannte Zeichencodeinformation empfängt, die von dem genannten Endgerät (400) übertragen wird;
ein Zeichenbilderzeugungsmittel (6), das in dem genannten ersten Netzwerk-Interfacemittel (5) ein Zeichenbild aus der genannten Zeichencodeinformation erzeugt;
ein Bildsynthesemittel (3), das die genannten Videosignale in dem genannten ersten Eingabemittel (1) und das genannte Zeichenbild in dem genannten Zeichenbilderzeugungsmittel (6) zusammensetzt; und
ein Bilddarstellungsmittel (4), das das in dem genannten Bildsynthesemittel (3) zusammengesetzte Bild darstellt,
**dadurch gekennzeichnet, dass**
das genannte Endgerät (400) enthält:
ein Erfassungsmittel (26), das mittels eines Erfassungsprotokolls aus der genannten Mehrzahl von Bilddarstellungsvorrichtungen (100) Bilddarstellungsvorrichtungen (100) erfasst, die fähig sind, das genannte Zeichenbild darzustellen; und
ein Darstellungsvorrichtungsspeichermittel (24), das erfasste Information über die genannten Bilddarstellungsvorrichtungen (100), die in dem genannten Erfassungsmittel (26) erfasst wurden, speichert; und
ein zweites Netzwerk-Interfacemittel (20), das die genannte Zeichencodeinformation zu den genannten Bilddarstellungsvorrichtungen (100) überträgt, über die in dem genannten Darstellungsvorrichtungsspeichermittel (24) erfasste Information vorhanden ist.

2. Das Bilddarstellungssystem nach Anspruch 1, wobei das genannte Endgerät (400) weiterhin enthält:
ein zweites Eingabemittel (21), das fähig ist, extern eine Zeichenfolge einzugeben;
ein Zeichencodeinformationserzeugungsmittel (22), das aus der genannten Zeichenfolge in dem genannten zweiten Eingabemittel (21) die genannte Zeichencodeinformation erzeugt; und
ein Kommunikationsbefehlsumwandlungsmittel (23), das die in dem genannten Zeichencodeinformationserzeugungsmittel (22) erzeugte Zeichencodeinformation in einen Kommunikationsbefehl zur Übertragung an das genannte Netzwerk umwandelt, wobei
das genannte zweite Netzwerk-Interfacemittel (20) den genannten, in dem genannten Kommunikationsbefehlsumwandlungsmittel (23) umgewandelten Kommunikationsbefehl an die genannten Bilddarstellungsvorrichtungen (100) überträgt, über die in dem genannten Darstellungsvorrichtungsspeichermittel (24) erfasste Information vorhanden ist, und wobei das genannte Erfassungsprotokoll ein Protokoll ist, das die genannten Bilddarstellungsvorrichtungen (100), die fähig sind das genannte Zeichen bild darzustellen, in einer Weise erfasst, dass das genannte Endgerät (400) eine zuvor bestimmte gegebene Zeichenfolge an die genannte Mehrzahl von Bilddarstellungsvorrichtungen (100) durch das genannte Netzwerk überträgt und die genannten Bilddarstellungsvorrichtungen (100), die fähig sind das genannte Zeichenbild darzustellen, eine Antwort an das genannte Endgerät (400) durch das genannte Netzwerk übertragen.

3. Das Bilddarstellungssystem nach einem der Ansprüche 1 oder 2, wobei das genannte Darstellungsvorrichtungsspeichermittel (24) eine Liste der genannten Bilddarstellungsvorrichtungen (100), die in dem genannten Erfassungsmittel (26) erfasst wurden, speichert.

4. Das Bilddarstellungssystem nach einem der Ansprüche 1, 2 oder 3, wobei die Bilddarstellungsvorrichtungen (100) weiterhin enthalten:
ein Speichermittel (7) zum vorab Speichern von Zeichenbildinformation, die zeichenförmige Information entsprechend der genannten Zeichencodeinformation ist,
wobei das genannte Zeichenbilderzeugungsmittel (6) das genannte Zeichenbild aus der genannten Zeichencodeinformation und der genannten Zeichenbildinformation in dem genannten Speichermittel (7) erzeugt.

5. Das Bilddarstellungssystem nach einem der Ansprüche 1, 2, 3 oder 4, wobei das genannte erste Eingabemittel (1) ein Eingangsquellenauswahlmittel ist, das die Videosignale, die eingegeben werden sollen, schaltet und auswählt.

## Revendications

1. Système d'affichage d'image comprenant :
un terminal (400) transmettant des informations de code de caractères ; et
une pluralité de dispositifs d'affichage d'image (100) dont chacun est connecté audit terminal (400) à travers un réseau et affiche une image ;
dans lequel lesdits dispositifs d'affichage d'image (100) comportent respectivement :
un premier moyen d'entrée (1) auquel sont fournis en entrée des signaux vidéo ;
un premier moyen d'interface de réseau (5) recevant lesdites informations de code de caractères transmises à partir dudit terminal (400) ;
un moyen de génération d'image de caractères (6) générant une image de caractères à partir desdites informations de code de caractères dans ledit premier moyen d'interface de réseau (5) ;
un moyen de synthèse d'image (3) synthétisant lesdits signaux vidéo dans ledit premier moyen d'entrée (1) et ladite image de caractères dans ledit moyen de génération d'image de caractères (6) ; et
un moyen d'affichage d'image (4) affichant l'image synthétisée dans ledit moyen de synthèse d'image (3) ;
**caractérisé en ce que** :
ledit terminal (400) inclut :
un moyen de détection (26) détectant des dispositifs d'affichage d'image (100) aptes à afficher ladite image de caractères parmi ladite pluralité de dispositifs d'affichage d'image (100), par le biais d'un protocole de détection ; et
un moyen de stockage de dispositifs d'affichage (24) stockant des informations détectées connexes auxdits dispositifs d'affichage d'image (100) détectés dans ledit moyen de détection (26) ; et
un second moyen d'interface de réseau (20) transmettant lesdites informations de code de caractères auxdits dispositifs d'affichage d'image (100), indiquant quelles informations détectées sont présentes dans ledit moyen de stockage de dispositifs d'affichage (24).

2. Système d'affichage d'image selon la revendication 1, dans lequel ledit terminal (400) inclut en outre :
un second moyen d'entrée (21) apte à entrer de manière externe une chaîne de caractères ;
un moyen de génération d'informations de code de caractères (22) générant lesdites informations de code de caractères à partir de ladite chaîne de caractères dans ledit second moyen d'entrée (21) ; et
un moyen de conversion de commande de communication (23) convertissant lesdites informations de code de caractères générées dans ledit moyen de génération d'informations de code de caractères (22) en une commande de communication à transmettre audit réseau, dans lequel
ledit second moyen d'interface de réseau (20) transmet ladite commande de communication convertie dans ledit moyen de conversion de commande de communication (23), auxdits dispositifs d'affichage d'image (100), indiquant quelles informations détectées sont présentes dans ledit moyen de stockage de dispositifs d'affichage (24), et ledit protocole de détection est un protocole détectant lesdits dispositifs d'affichage d'image (100) aptes à afficher ladite image de caractères, de sorte que ledit terminal (400) transmet une chaîne de caractères donnée préalablement déterminée, à ladite pluralité de dispositifs d'affichage d'image (100) à travers ledit réseau, et lesdits dispositifs d'affichage d'image (100) aptes à afficher ladite image de caractères transmettent une réponse audit terminal (400) à travers ledit réseau.

3. Système d'affichage d'image selon l'une quelconque des revendications 1 ou 2, dans lequel ledit moyen de stockage de dispositifs d'affichage (24) stocke une liste desdits dispositifs d'affichage d'image (100) détectés dans ledit moyen de détection (26).

4. Système d'affichage d'image selon l'une quelconque des revendications 1, 2 ou 3, dans lequel les dispositifs d'affichage d'image (100) comprennent en outre :
un moyen de stockage (7) stockant préalablement des informations d'image de caractères lesquelles sont des informations en forme de caractères correspondant auxdites informations de code de caractères ;
dans lequel ledit moyen de génération d'image de caractères (6) génère ladite image de caractères à partir desdites informations de code de caractères et desdites informations d'image de caractères dans ledit moyen de stockage (7).

5. Système d'affichage d'image selon l'une quelconque des revendications 1, 2, 3 ou 4, dans lequel ledit premier moyen d'entrée (1) est un moyen de sélection de source d'entrée commutant et sélectionnant lesdits signaux vidéo devant être fournis en entrée.
